# EUROPÄISCHE PATENTANMELDUNG

(11) **EP 1 612 633 A1**
(43) Veröffentlichungstag der Anmeldung: **04.01.2006**
(21) Anmeldenummer: 05010631.9
(22) Anmeldetag: 17.05.2005
(51) Int. Cl.: G05D 13/00

(54) **Signalübertragung**

(30) Priorität: 01.07.2004 DE 102004032022
(71) Anmelder: WALTER DITTEL GmbH, 86899 Landsberg/Lech 1 (DE)
(72) Erfinder: Oeser, Frank, 07629 Hermsdorf (DE); Adolph, Harald, 86483 Balzhausen (DE); Biber, Roland, 86981 Kinsau (DE)
(74) Vertreter: Manitz, Finsterwald & Partner GbR

(57) **Zusammenfassung**

Die Erfindung betrifft ein System zur berührungslosen Signal- und Energieübertragung mit einer Sendevorrichtung zum Senden eines digitalen Signals, das zumindest ein mittels einer Messeinrichtung erzeugtes Messsignal, insbesondere ein mittels einer A/D-Wandlungseinheit der Sendevorrichtung digitalisiertes Messsignal, umfasst, und einer Empfangsvorrichtung zum Empfangen des gesendeten digitalen Signals, wobei die Sendevorrichtung relativ zu der Empfangsvorrichtung bewegbar, insbesondere drehbewegbar, und Energie von der Empfangsvorrichtung an die Sendevorrichtung zur Energieversorgung der Sendevorrichtung und/oder der Messeinrichtung übertragbar ist. Die Erfindung betrifft ferner ein entsprechendes Verfahren.

## Beschreibung

Die Erfindung betrifft ein System zur Signalübertragung zwischen einer Sendevorrichtung und einer Empfangsvorrichtung, wobei die Sendevorrichtung relativ zu der Empfangsvorrichtung bewegbar ist. Die Erfindung betrifft ferner ein entsprechendes Verfahren.

Derartige Systeme und Verfahren zur Signalübertragung zwischen einer Sendevorrichtung und einer Empfangsvorrichtung sind grundsätzlich bekannt. Bei diesen bekannten Systemen und Verfahren kann die Sendevorrichtung, die relativ zu der Empfangsvorrichtung bewegbar ist, ein mittels einer Messeinrichtung erzeugtes analoges Messsignal an die Empfangsvorrichtung übertragen, wobei das Messsignal durch die Empfangsvorrichtung oder an die Empfangsvorrichtung angeschlossene Mittel ausgewertet und/oder weiterverarbeitet wird.

Zur Übertragung der analogen Messsignale werden bei Übertragungssystemen der eingangs genannten Art Schleifkontakte verwendet, die bei bezüglich der Empfangsvorrichtung rotierenden Sendevorrichtungen als Schleifringe ausgebildet sein können. Nachteilig bei derartigen Übertragungssystemen ist jedoch, dass die Schleifkontakte durch Abrieb verschleißen, so dass insbesondere bei langer Nutzungsdauer Zuverlässigkeitsprobleme auftreten können. Dies ist insbesondere bei Hochgeschwindigkeitsbearbeitungsmaschinen der Fall, die im Betrieb rotierende Teile mit einer Umdrehungsgeschwindigkeit von derzeit bis zu 10000 U/min aufweisen können.

Der Erfindung liegt die Aufgabe zugrunde, ein System und ein Verfahren der eingangs genannten Art derart weiterzubilden, dass bei einer relativ zu der Empfangsvorrichtung bewegbaren, insbesondere drehbewegbaren Sendevorrichtung auch bei langer Nutzungsdauer und hohen Relativgeschwindigkeiten eine zuverlässige Übertragung von mittels einer Messeinrichtung erzeugten analogen Messsignalen ermöglicht und insbesondere gleichzeitig die Energieversorgung der Sendevorrichtung und/oder der Messeinrichtung gewährleistet ist.

Die Lösung dieser Aufgabe erfolgt zum einen durch die Merkmale des unabhängigen Vorrichtungsanspruchs und insbesondere durch ein System zur berührungslosen Signal- und Energieübertragung mit einer Sendevorrichtung zum Senden eines digitalen Signals, das zumindest ein mittels einer Messeinrichtung erzeugtes Messsignal, insbesondere ein mittels einer A/D-Wandlungseinheit der Sendevorrichtung digitalisiertes Messsignal, umfasst, und einer Empfangsvorrichtung zum Empfangen des gesendeten digitalen Signals, wobei die Sendevorrichtung relativ zu der Empfangsvorrichtung bewegbar, insbesondere drehbewegbar, und Energie von der Empfangsvorrichtung an die Sendevorrichtung zur Energieversorgung der Sendevorrichtung und/oder der Messeinrichtung übertragbar ist.

Die Lösung der der Erfindung zugrunde liegenden Aufgabe erfolgt außerdem durch die Merkmale des unabhängigen Verfahrensanspruchs und insbesondere durch ein Verfahren zur berührungslosen Signal- und Energieübertragung zwischen einer Sendevorrichtung und einer Empfangsvorrichtung, die relativ zueinander bewegbar, insbesondere drehbewegbar sind, wobei ein Messsignal mittels einer Messeinrichtung erzeugt, insbesondere das Messsignal mittels einer A/D-Wandlungseinheit der Sendevorrichtung digitalisiert, ein digitales Signal, das zumindest das Messsignal umfasst, mittels der Sendevorrichtung gesendet, das gesendete digitale Signal mittels der Empfangsvorrichtung empfangen, und Energie von der Empfangsvorrichtung an die Sendevorrichtung zur Energieversorgung der Sendevorrichtung und/oder der Messeinrichtung übertragen wird.

Die Erfindung zeichnet sich dadurch aus, dass die Sendevorrichtung zumindest zur Signalübertragung an die Empfangsvorrichtung und die Empfangsvorrichtung zumindest zur Energieübertragung an die Sendevorrichtung ausgebildet ist, wobei die Sendevorrichtung relativ zu der Empfangsvorrichtung bewegbar, insbesondere drehbewegbar ist. Hierdurch ist beispielsweise eine bidirektionale Übertragung ermöglicht, wobei die Sendevorrichtung als Sender für Signale und Empfänger für Energie und die Empfangsvorrichtung als Sender für Energie und Empfänger für Signale ausgebildet ist. Die durch die Begriffe "Sendevorrichtung" und "Empfangsvorrichtung" implizierte Richtung ist hier bezüglich des zu übertragenden Signals - und nicht der Energie - gemeint. Die Signalübertragung und die Energieübertragung sind dann jeweils als Simplex-Übertragung realisiert. Erfindungsgemäß ist es ferner möglich, dass die Signal- und/oder die Energieübertragung als Duplex-Übertragung realisiert ist. Insbesondere kann vorgesehen sein, dass die Empfangsvorrichtung zusätzlich zur Signalübertragung an die Sendevorrichtung ausgelegt ist.

Die von der Empfangsvorrichtung an die Sendevorrichtung übertragene Energie wird zur Energieversorgung der Sendevorrichtung und/oder der Messeinrichtung eingesetzt, wobei die Messeinrichtung mit der Sendevorrichtung verbindbar ist. Insbesondere kann die Energie sowohl bei relativ zur Empfangsvorrichtung bewegter als auch unbewegter Sendevorrichtung von der Empfangsvorrichtung an die Sendevorrichtung übertragen werden. Gleiches gilt auch für das zu übertragende Signal, das von der Sendevorrichtung an die Empfangsvorrichtung übertragen wird.

Erfindungsgemäß erfolgen die Signalübertragung und die Energieübertragung jeweils berührungslos. Durch die berührungslose Übertragung kann auf zu Verschleiß neigende Schleifkontakte verzichtet werden, so dass eine zuverlässige Signalübertragung gewährleistet ist. Insbesondere kann hierdurch das erfindungsgemäße System in dieser Hinsicht wartungsfrei betrieben werden.

Erfindungsgemäß ist insbesondere eine A/D-Wandlungseinheit vorgesehen, die bei Verwendung einer Messeinrichtung, die analoge Messsignale erzeugt, das analoge Messsignal digitalisiert. Gemäß der Erfindung kann aber auch eine Messeinrichtung verwendet werden, die ein digitales Signal erzeugt. Insbesondere kann das Messsignal mit hoher Genauigkeit erfasst werden. Mittels der Sendevorrichtung, die insbesondere die A/D-Wandlungseinheit umfasst, kann das digitale Signal an die Empfangsvorrichtung gesendet werden, die das digitale Signal empfängt.

Das gesendete digitale Signal umfasst zumindest das Messsignal. Das gesendete Signal kann neben dem Messsignal beispielsweise bereits in digitaler Form vorliegende Einzelsignale umfassen, wobei das Messsignal und die digitalen Einzelsignale als ein gemeinsames digitales Signal an die Empfangsvorrichtung gesendet werden. Zur Fehlererkennung wird bevorzugt ein Protokoll für die kontrollierte Übermittlung des digitalen Signals verwendet, so dass es möglich ist, Systemfehler möglichst früh zu erkennen und diese an an die Empfangsvorrichtung des erfindungsgemäßen Systems angeschlossene Auswerte- und/oder Weiterverarbeitungsmittel zu melden. Das erfindungsgemäße System kann auch zur ausschließlichen Übertragung von anderen Signalen als Messsignalen ausgelegt sein.

Erfindungsgemäß ist es somit möglich, von einer Empfangsvorrichtung Energie an eine relativ zu der Empfangsvorrichtung bewegte, insbesondere rotierende Sendevorrichtung zu übertragen, ein mittels der Messeinrichtung gemessenes Messsignal mit hoher Genauigkeit zu erfassen, insbesondere zu digitalisieren, mittels der Sendevorrichtung an die Empfangsvorrichtung schnell und sicher digital zu übertragen und ggf. zu reanalogisieren, wie an anderer Stelle noch näher erläutert wird, wobei die Digitalisierung, Signalübertragung und Re-Analogisierung in Echtzeit mit einer Verzögerung von kleiner als 10 µs stattfinden kann.

Die Erfindung vereint dabei in einzigartiger Weise Komponenten verschiedener Fachgebiete: kontaktlose Energieübertragung insbesondere aus dem Fachgebiet der Leistungselektronik, schnelle und genaue Erfassung und/oder Aufbereitung des Messsignals insbesondere aus dem Fachgebiet der Analog- und Digitaltechnik und schnelle und sichere Signalübertragung insbesondere aus dem Fachgebiet der Hochfrequenztechnik.

Vorteilhafte Ausführungsformen der Erfindung sind in den Unteransprüchen, der Beschreibung sowie der Zeichnung angegeben.

Des Weiteren wird erfindungsgemäß vorgeschlagen, dass die Messeinrichtung und/oder die Sendevorrichtung an einem rotierenden Gegenstand, insbesondere einer Spindel oder einer Welle, anbringbar ist. Die Messeinrichtung kann beispielsweise ein Längenmesssystem oder ein Winkelmesssystem sein. Das Messsignal wird mittels der Messeinrichtung auf dem rotierenden Gegenstand erzeugt und insbesondere dort mittels der Sendevorrichtung digitalisiert. Der rotierende Gegenstand kann insbesondere ein schnell rotierender Teil einer Hochgeschwindigkeitsbearbeitungsmaschine sein. Vorzugsweise ist die Sendevorrichtung als Rotor und die Empfangsvorrichtung als Stator ausgebildet. Grundsätzlich sind jedoch alle Anwendungen denkbar, in denen zwischen relativ zueinander bewegten Einrichtungen Signale und Energie insbesondere zur Messwerterfassung übertragen werden sollen.

Zur Aufbereitung des Messsignals, zur Parallel/ Seriell-Wandlung des zu sendenden digitalen Signals, zur Modulation einer Trägerfrequenz mit dem digitalen Signal und/oder zum Senden des insbesondere auf eine Trägerfrequenz aufmodulierten digitalen Signals kann die Sendevorrichtung eines oder mehrere der folgenden Elemente umfassen: Signalaufbereitungseinheit, Parallel/Seriell-Wandlungseinheit, Modulationseinheit und Sendeeinheit.

Zum Empfangen des insbesondere auf eine Trägerfrequenz aufmodulierten digitalen Signals, zur Demodulation einer mit dem digitalen Signal modulierten Trägerfrequenz bzw. zur Rekonstruktion des digitalen Signals und/oder zur Seriell/Parallel-Wandlung des digitalen Signals kann die Empfangsvorrichtung eines oder mehrere der folgenden Elemente umfassen: Empfangseinheit oder Antenneneinheit, Demodulationseinheit, Impulsaufbereitungseinheit, Synchronisationseinheit und Seriell/Parallel-Wandlungseinheit.

Falls zur Signalauswertung und/oder weiteren Signalverarbeitung erforderlich, kann die Empfangsvorrichtung eine D/A-Wandlungseinheit zur Analogisierung zumindest eines Teils des digitalen Signals und/oder eine Signalaufbereitungseinheit und/oder eine Pegelerzeugungseinheit umfassen. Insbesondere kann bei analogem Messsignal der das digitalisierte Messsignal umfassende Teil des digitalen Signals mittels der D/A-Wandlungseinheit re-analogisiert werden. Dies ist insbesondere dann von Vorteil, wenn an die Empfangsvorrichtung des erfindungsgemäßen Systems angeschlossene, aus dem Stand der Technik bekannte, auf einem analogen Messsignal basierende Auswerte- und/oder Weiterverarbeitungsmittel verwendet werden. Das empfangene Signal kann grundsätzlich aber auch in digitaler Form ausgewertet und/oder weiterverarbeitet werden.

Ferner kann erfindungsgemäß die Sendevorrichtung oder ein Teil hiervon und/oder die Empfangseinheit oder ein Teil hiervon drehinvariant bezüglicher einer Systemdrehachse ausgebildet sein, so dass die Signalübertragung und/oder die Energieübertragung unabhängig von der Winkelstellung einer auf einem rotierenden Gegenstand angebrachten Sendevorrichtung relativ zur Empfangsvorrichtung ist. Die Systemdrehachse entspricht dann der Drehachse des rotierenden Gegenstands, an dem die Sendevorrichtung angebracht ist.

Gemäß einer vorteilhaften Ausführungsform der Erfindung ist zur Signalübertragung das digitale Signal auf eine HF-Trägerfrequenz aufmoduliert. Die Trägerfrequenz, d.h. eine zugelassene Frequenz mit einer für die Übertragung notwendigen Bandbreite, wird mit der Datenrate getaktet und an die Empfangsvorrichtung übertragen. Die Trägerfrequenz kann beispielsweise im GHz-Bereich angeordnet sein und/oder es können mehrere Kanäle vorgesehen sein.

Besonders vorteilhaft ist es, wenn das digitale Signal kapazitiv von der Sendevorrichtung an die Empfangsvorrichtung übertragbar ist. Zur kapazitiven Signalübertragung weisen die Sendevorrichtung und die Empfangsvorrichtung bevorzugt jeweils eine Elektrode auf. Insbesondere können die Elektroden jeweils drehinvariant bezüglich einer Systemdrehachse, insbesondere kreisrund, ausgebildet sein. Beispielsweise können zwei als kreisrunde Kondensatorplatten ausgebildete Elektroden vorgesehen sein. Durch die Drehinvarianz der Elektroden bezüglich einer Systemdrehachse, wie sie vorstehend erläutert ist, können Amplitudenfehler und/oder Phasenfehler bei der Signalübertragung von einer relativ zu der Empfangsvorrichtung rotierenden Sendevorrichtung an die Empfangsvorrichtung vermieden werden.

Alternativ kann das digitale Signal optisch von der Sendevorrichtung an die Empfangsvorrichtung übertragbar sein. Zur optischen Signalübertragung kann die Sendevorrichtung eine optische Sendeeinheit, insbesondere eine Sendediode, und die Empfangsvorrichtung eine optische Empfangseinheit, insbesondere eine Empfangsdiodenanordnung, umfassen. Die Empfangsdiodenanordnung kann auch lediglich eine einzige Empfangsdiode umfassen. Insbesondere können die optische Sendeeinheit und die optische Empfangseinheit zur Signalübertragung im Infrarot-Bereich, im Ultraviolett-Bereich oder im sichtbaren Bereich ausgebildet sein. Bei Verwendung optischer Filter, die Bestandteil der Empfangsvorrichtung sein können, können verschiedene optische Frequenzbereiche ausgenutzt werden.

Nach einer besonders bevorzugten Ausführungsform der Erfindung ist die optische Sende- bzw. Empfangseinheit zentrisch bezüglich einer Systemdrehachse ausgebildet. Bei einer zentrischen Anordnung bezüglich einer wie vorstehend erläuterten Systemdrehachse kann die Übertragung des digitalen Signals auf besonders einfache Weise unabhängig von der Winkelstellung der Sendevorrichtung relativ zur Empfangsvorrichtung ausgelegt werden.

Zur Energieerzeugung umfasst die Empfangsvorrichtung bevorzugt einen Leistungsoszillator oder Takt/Frequenzgenerator. Die Energie wird hierbei nicht unter Anwendung eines Dynamoprinzips erzeugt, so dass die durch den Leistungsoszillator oder Takt/ Frequenzgenerator erzeugte Energie auch dann von der Empfangsvorrichtung an die Sendevorrichtung übertragen werden kann, wenn sich die Sendevorrichtung relativ zur Empfangsvorrichtung in Ruhe befindet.

Nach einer besonderen Ausgestaltung der Erfindung ist die Energie induktiv von der Empfangsvorrichtung an die Sendevorrichtung übertragbar. Zur induktiven Energieübertragung können die Empfangsvorrichtung und die Sendevorrichtung jeweils ein insbesondere durch Ferrit unterstütztes Spulensystem aufweisen. Das Spulensystem der Sendevorrichtung ist bevorzugt als Teil eines auf eine Betriebsfrequenz des Spulensystems der Empfangsvorrichtung abgestimmten Serienschwingkreises ausgebildet, so dass dem Spulensystem der Sendevorrichtung große Ströme entnommen werden können. Bei Einhaltung von Wickeldaten, mechanischen Abständen und Bauelementetoleranzen können überraschend gut reproduzierbare Übertragungswerte erzielt werden.

Die Spulensysteme der Empfangsvorrichtung und der Sendevorrichtung besitzen bevorzugt einen Abstand von einigen Millimetern oder kleiner. Hierdurch kann ein hoher Wirkungsgrad der Energieübertragung insbesondere von größer 60% erzielt werden kann. Prinzipiell sind aber auch andere und insbesondere größere Abstände möglich.

Alternativ kann die Energie optisch von der Empfangsvorrichtung an die Sendevorrichtung übertragbar sein. Zur optischen Energieübertragung kann die Empfangsvorrichtung eine Lichtsendeeinheit und die Sendevorrichtung zumindest ein Photovoltaik-Element, insbesondere eine Solarzelle, umfassen. Insbesondere können das oder die Photovoltaik-Elemente drehinvariant bezüglich einer Systemdrehachse ausgebildet sein. Durch die Drehinvarianz des oder der Photovoltaik-Elemente bezüglich einer wie vorstehend erläuterten Systemdrehachse ist die Energie, die dem oder den Photovoltaik-Elementen entnommen werden kann, unabhängig von der Winkelstellung der Sendevorrichtung relativ zu der Empfangsvorrichtung. Die optische Energieübertragung ist ferner nicht durch elektrische und/oder magnetische Störfelder beeinflussbar, kann selbst keine Störfelder erzeugen und auch bei größeren Abständen voneinander verwendet werden.

Die Erfindung wird im Folgenden beispielhaft unter Bezugnahme auf die Zeichnung beschrieben. Es zeigen:
- Fig. 1: ein vereinfachtes Blockschaltbild von zur Signalübertragung vorgesehenen Elementen einer Sendevorrichtung eines erfindungsgemäßen Systems,
- Fig. 2: ein vereinfachtes Blockschaltbild von zur Signalübertragung vorgesehenen Elementen einer Empfangsvorrichtung eines erfindungsgemäßen Systems,
- Fig. 3: eine perspektivische Ansicht einer konstruktiven Ausführungsform eines erfindungsgemäßen Systems,
- Fig. 4: eine Frontalansicht des erfindungsgemäßen Systems von Fig. 3,
- Fig. 5: einen Längsschnitt durch das erfindungsgemäße System von Fig. 4 entlang der Linie A - A, und
- Fig. 6: einen Längsschnitt durch das erfindungsgemäße System von Fig. 4 entlang der Linie B - B.

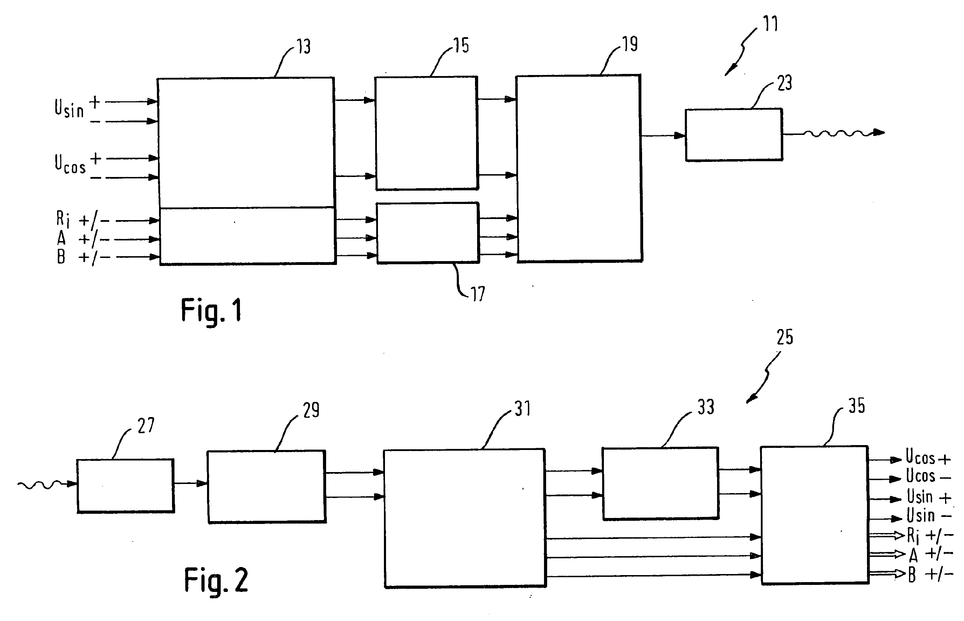

Bei der in Fig. 1 dargestellten Sendevorrichtung 11 zur berührungslosen Signalübertragung wird ein durch eine nicht dargestellte Messeinrichtung erzeugtes analoges Messsignal Uₛᵢₙ, D_{cos}, das beispielsweise eine Länge oder einen Winkel repräsentiert, an eine Signalaufbereitungseinheit 13 zur Aufbereitung des analogen Messsignals Uₛᵢₙ, D_{cos} angelegt. Zusätzlich zu dem analogen Messsignal Uₛᵢₙ, U_{cos} werden an die Signalaufbereitungseinheit 13 drei digitale Einzelsignale Ri, A, B angelegt, die ebenfalls durch die Signalaufbereitungseinheit 13 aufbereitet werden.

Das aufbereitete analoge Signal wird von der Signalaufbereitungseinheit 13 an eine A/D-Wandlungseinheit 15 weitergegeben, um dort digitalisiert zu werden, wobei das digitalisierte Signal in paralleler Form von der A/ D-Wandlungseinheit 15 ausgegeben wird. Die A/D-Wandlungseinheit 15 kann beispielsweise eine Ausgaberate im Bereich von 333 kS/s bis zu 500 kS/s und eine Auflösung von 12 Bit aufweisen. Die von der Signalaufbereitungseinheit 13 aufbereiteten digitalen Einzelsignale werden von einer Einleseeinheit 17 eingelesen.

Die Sendevorrichtung 11 des erfindungsgemäßen Systems umfasst ferner eine mit der A/D-Wandlungseinheit 15 und der Einleseeinheit 17 verbundene Parallel/ Seriell-Wandlungseinheit 19 zur Parallel/ Seriell-Wandlung des in paralleler Form vorliegenden digitalisierten Signals und der dazu parallel vorliegenden digitalen Einzelsignale. Von der Parallel/ Seriell-Wandlungseinheit 19 wird ein das digitalisierte Signal und die digitalen Einzelsignale umfassendes digitales Signal in serieller Form ausgegeben. Um eine kontrollierte Signalübertragung zu gewährleisten und/oder Systemfehler möglichst früh erkennen zu können, wird ein Fehler erkennendes Protokoll verwendet.

Das von der Parallel/Seriell-Wandlungseinheit 19 in serieller Form ausgegebene digitale Signal wird mittels einer mit der Parallel/ Seriell-Wandlungseinheit 19 verbundenen, nicht dargestellten Modulationseinheit zur Codierung des zu übertragenden digitalen Signals auf eine HF-Trägerfrequenz aufmoduliert, die beispielsweise 2,4 GHz beträgt. Die Modulationseinheit ist mit einer Sendeeinheit 23 zum Senden des digitalen Signals verbunden.

Das durch die in Fig. 1 dargestellte Sendevorrichtung 11 erzeugte digitale Signal wird über die Sendeeinheit 23 an eine Empfangseinheit 27 einer in Fig. 2 dargestellten Empfangsvorrichtung 25 des erfindungsgemäßen Systems berührungslos übertragen. Zur Rekonstruktion des digitalen Signals aus der mit dem digitalen Signal modulierten Trägerfrequenz ist eine der Empfängereinheit 27 nachgeschaltete Demodulationseinheit 29 vorgesehen.

Das rekonstruierte digitale Signal, das nach der Rekonstruktion durch die Demodulationseinheit 29 zunächst in serieller Form vorliegt, wird zur Seriell/Parallel-Wandlung von der Demodulationseinheit 29 an eine Seriell/Parallel-Wandlungseinheit 31 übergeben. Die Seriell/Parallel-Wandlungseinheit 31 weist darüber hinaus einen Abschnitt auf, der als Protokoll-Zustandsautomat ausgebildet ist. Das digitale Signal wird von der Seriell/ Parallel-Wandlungseinheit 31 in paralleler Form ausgegeben, wobei das ausgegebene digitale Signal dem zuvor in die Parallel/Seriell-Wandlungseinheit 19 der Sendevorrichtung 11 eingegebenen Signal entspricht bzw. das in paralleler Form vorliegende digitalisierte Signal und die digitalen Einzelsignale umfasst.

Der das digitalisierte Signal umfassende Teil des von der Seriell/Parallel-Wandlungseinheit 31 ausgegebenen digitalen Signals wird mittels einer D/A-Wandlungseinheit 33 re-analogisiert.

Zur Signalaufbereitung und Pegelwandlung des re-analogisierte Signals und der digitalen Einzelsignale ist eine Signalaufbereitungseinheit 35 vorgesehen. Am Ausgang der Signalaufbereitungseinheit 35 liegen somit das analoge Messsignal Uₛᵢₙ, U_{cos} und die digitalen Einzelsignale Rᵢ, A, B in der zuvor von der Messeinrichtung ausgegebenen und in die Signalaufbereitungseinheit 13 der Sendevorrichtung 11 eingegebenen Form vor, so dass aus dem Stand der Technik bekannte Auswerte- und/oder Weiterverarbeitungsmittel, die lediglich zur Verarbeitung eines analogen Messsignals ausgebildet sind, an das erfindungsgemäße System angeschlossen werden können.

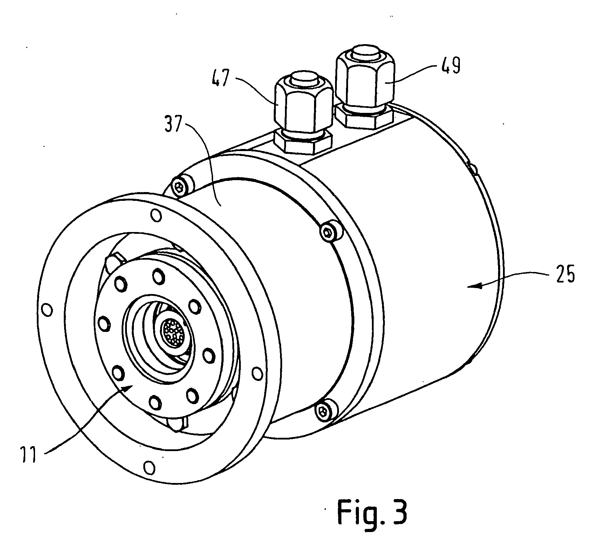

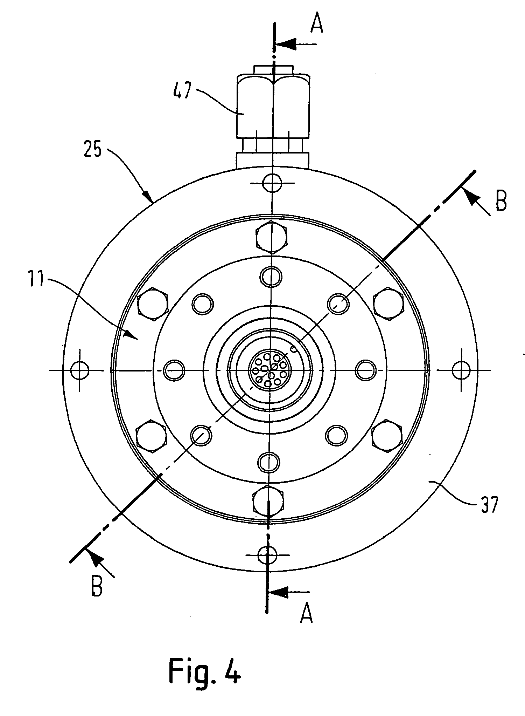

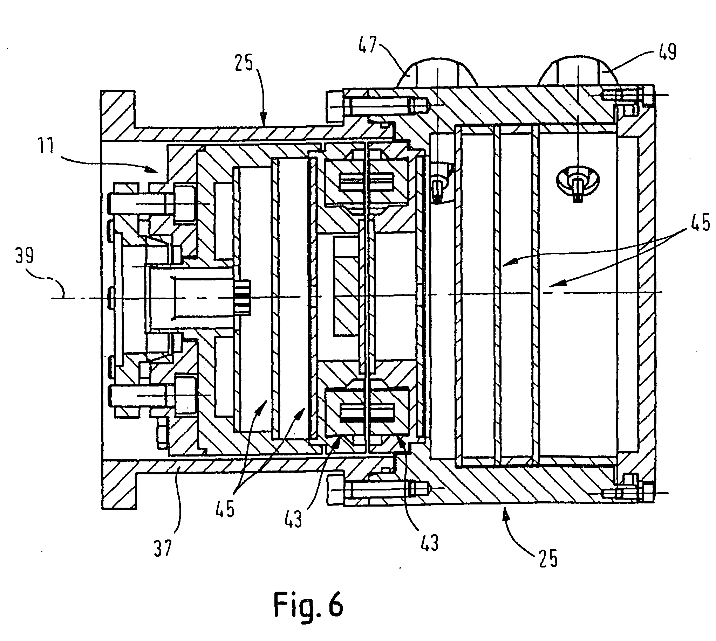

Die Fig. 3 bis 6 zeigen eine konstruktive Ausführungsform eines erfindungsgemäßen Systems zur berührungslosen Signal- und Energieübertragung mit einer Sendevorrichtung 11 zum Senden eines digitalen Signals und einer Empfangsvorrichtung 25 zum Empfangen des gesendeten digitalen Signals, wobei in entgegengesetzter Richtung, d.h. von der Empfangsvorrichtung 25 an die Sendevorrichtung 11, Energie übertragbar ist.

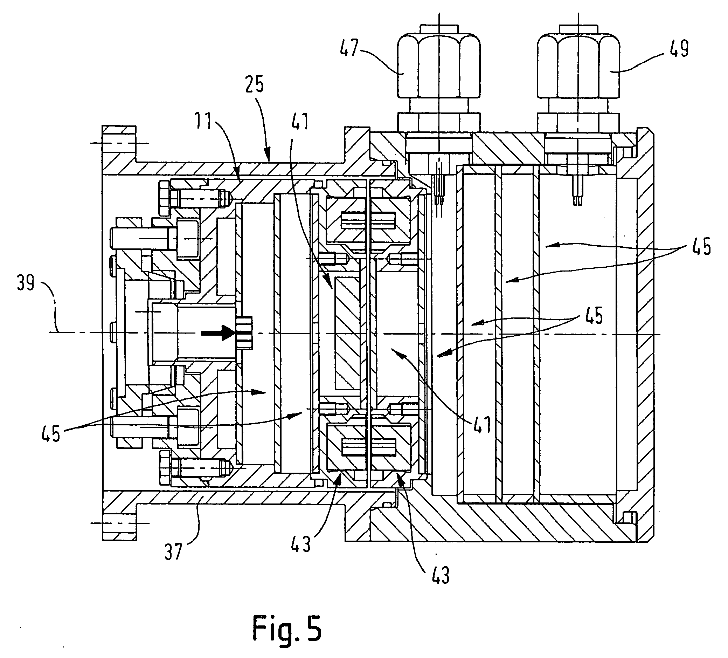

Die als Rotor ausgebildete Sendevorrichtung 11 ist innerhalb eines zylinderförmig ausgebildeten Statorflansches 37 der als Stator ausgebildeten Empfangsvorrichtung 25 um eine auch als Systemdrehachse bezeichnete Rotationsachse 39 rotierbar. Hierzu sind die Sendevorrichtung 11 und eine nicht dargestellte Messeinrichtung an einer nicht dargestellten Welle angebracht, so dass die Sendevorrichtung 11 relativ zu der Empfangsvorrichtung 25 drehbewegbar ist. Die Messeinrichtung ist zur Erzeugung eines beispielsweise eine Länge oder einen Winkel repräsentierenden analogen Messsignals ausgebildet. Das analoge Messsignal wird von der Messeinrichtung an die Sendevorrichtung 11 übertragen, wie in Fig. 5 mittels eines Pfeils veranschaulicht.

Zur kapazitiven Signalübertragung von der Sendevorrichtung 11 an die Empfangsvorrichtung 25 weisen die Sendevorrichtung 11 und die Empfangsvorrichtung 25 jeweils eine insbesondere als kreisrunde Kondensatorplatte 41 ausgebildete Elektrode auf, die einander gegenüberliegen und deren Mittelpunkte mit der Rotationsachse 39 zusammenfallen, so dass die Kondensatorplatten 41 drehinvariant bezüglich der Rotationsachse 39 ausgebildet sind. Die Kondensatorplatten 41 entsprechen dabei der Sendeeinheit 23 und der Empfangseinheit 27 aus den Fig. 1 und 2.

Die Sendevorrichtung 11 und die Empfangsvorrichtung 25 umfassen ferner jeweils ein ferritunterstütztes Spulensystem 43, die zur induktiven Energieübertragung von der Empfangsvorrichtung 25 an die Sendevorrichtung 11 zur Energieversorgung der Sendevorrichtung 11 und der Messeinrichtung vorgesehen sind, wobei die Spulensysteme 43 einen gegenseitigen Abstand von 0,8 mm aufweisen. Die Spulensysteme 43 sind jeweils als Kreisring und somit ebenfalls drehinvariant bezüglich der Rotationsachse 39 ausgebildet. Die Elektroden 41 der Sendevorrichtung 11 und Empfangsvorrichtung 25 sind jeweils im Zentrum des insbesondere als Kreisring ausgebildeten Spulensystems 43 angeordnet.

Die Sendevorrichtung 11 und Empfangsvorrichtung 25 weisen weiterhin jeweils mehrere Platinen 45 auf, die parallel zueinander und in senkrecht zur Rotationsachse 39 verlaufenden Ebenen angeordnet sind. Die Platinen 45 sind mit Elementen, insbesondere elektronischen Schaltungen bestückt, die zur Signalbearbeitung und Energieerzeugung vorgesehen sind. Die auf den Platinen 45 angebrachten Elemente umfassen einen nicht dargestellten Leistungsoszillator zur Energieerzeugung und die in den Fig. 1 und 2 gezeigten Elemente, wobei die Ansteuerung der A/ D-Wandlungseinheit und der D/A-Wandlungseinheit jeweils als frei programmierbare Logikschaltung, insbesondere als FPGA's und CPLD's, ausgebildet sind. Diese Logikschaltungen bearbeiten insbesondere auch die Parallel/ Seriell-Wandlung in der Sendevorrichtung 11 sowie die Synchronisation und die Seriell/Parallel-Wandlung in der Empfangsvorrichtung 25.

Der Leistungsoszillator, dessen Wechselspannung das Spulensystem 43 der Empfangsvorrichtung 25 beaufschlagt, wobei Energie induktiv an das Spulensystem 43 der Sendevorrichtung 11 übertragen wird, kann beispielsweise eine Betriebsfrequenz von 100 kHz und eine Ausgangsleistung von 10 W aufweisen. Das Spulensystem 43 der Sendevorrichtung 11 ist Teil eines nicht dargestellten Serienschwingkreises der Sendevorrichtung 11, der auf die Betriebsfrequenz des Spulensystems 43 der Empfangsvorrichtung 25 bzw. des Leistungsoszillators abgestimmt ist, um einen möglichst hohen Wirkungsgrad der Energieübertragung zu gewährleisten. Die aus dem Spulensystem 43 der Sendevorrichtung 11 entnommenen Ströme werden zur Stromversorgung der in Fig. 2 dargestellten Elemente und der Messeinrichtung verwendet.

Zur Spannungsversorgung der Empfangsvorrichtung 25, insbesondere des Leistungsoszillators und der in Fig. 1 dargestellten Elemente, weist die Empfangsvorrichtung 25 einen Bordspannungsanschluss 47 auf, der zum Anschluss an eine externe Spannungsquelle vorgesehen ist. Ferner weist die Empfangsvorrichtung 25 einen Signalanschluss 49 auf, der als Signalausgang zur Ausgabe der Signale an eine nicht dargestellte externe Auswerte- und/oder Weiterverarbeitungseinheit ausgebildet ist.

Das erfindungsgemäße System ermöglicht es in vorteilhafter Weise, auf insbesondere rotierenden Teilen gemessene analoge Messsignale mit außerordentlich hoher Genauigkeit und Geschwindigkeit auszulesen, berührungslos und digital an eine Empfangsvorrichtung 25 zu übertragen, zu rekonstruieren und an der Empfangsvorrichtung 25 in analoger Form wieder zur Verfügung zu stellen, wobei ebenfalls berührungslos Energie von der Empfangsvorrichtung 25 an die Sendevorrichtung 11 übertragbar ist.

### Bezugszeichenliste

- 11: Sendevorrichtung
- 13: Signalaufbereitungseinheit
- 15: A/D-Wandlungseinheit
- 17: Einleseeinheit
- 19: Parallel/ Seriell-Wandlungseinheit
- 23: Sendeeinheit
- 25: Empfangsvorrichtung
- 27: Empfängereinheit
- 29: Demodulationseinheit
- 31: Seriell/Parallel-Wandlungseinheit
- 33: D / A-Wandlungseinheit
- 35: Signalaufbereitungseinheit
- 37: Statorflansch
- 39: Rotationsachse
- 41: Kondensatorplatte
- 43: Spulensystem
- 45: Platine
- 47: Anschluss
- 49: Anschluss

## Patentansprüche

1. System zur berührungslosen Signal- und Energieübertragung mit
- einer Sendevorrichtung (11) zum Senden eines digitalen Signals, das zumindest ein mittels einer Messeinrichtung erzeugtes Messsignal, insbesondere ein mittels einer A/D-Wandlungseinheit (15) der Sendevorrichtung (11) digitalisiertes Messsignal, umfasst, und
- einer Empfangsvorrichtung (25) zum Empfangen des gesendeten digitalen Signals,
wobei
- die Sendevorrichtung (11) relativ zu der Empfangsvorrichtung (25) bewegbar, insbesondere drehbewegbar, und
- Energie von der Empfangsvorrichtung (25) an die Sendevorrichtung (11) zur Energieversorgung der Sendevorrichtung (11) und/oder der Messeinrichtung übertragbar ist.

2. System nach Anspruch 1,
**dadurch gekennzeichnet ,**
**dass** die Messeinrichtung und/oder die Sendevorrichtung (11) an einem rotierenden Gegenstand, insbesondere einer Spindel oder einer Welle, anbringbar ist.

3. System nach Anspruch 1 oder 2,
**dadurch gekennzeichnet ,**
**dass** die Sendevorrichtung (11) eines oder mehrere der folgenden Elemente umfasst: Signalaufbereitungseinheit (13), Parallel/Seriell-Wandlungseinheit (19), Modulationseinheit und Sendeeinheit (23).

4. System nach einem der vorhergehenden Ansprüche,
**dadurch gekennzeichnet ,**
**dass** die Empfangsvorrichtung (25) eines oder mehrere der folgenden Elemente umfasst: Empfangseinheit (27), Demodulationseinheit (29) und Seriell/Parallel-Wandlungseinheit (31).

5. System nach einem der vorhergehenden Ansprüche,
**dadurch gekennzeichnet ,**
**dass** die Empfangsvorrichtung (25) eine D/A-Wandlungseinheit (33) zur Analogisierung zumindest eines Teils des digitalen Signals und/oder eine Signalaufbereitungseinheit (35) umfasst.

6. System nach einem der vorhergehenden Ansprüche,
**dadurch gekennzeichnet ,**
**dass** die Sendevorrichtung (11) oder ein Teil (41, 43) hiervon und/oder die Empfangsvorrichtung (25) oder ein Teil (41, 43) hiervon drehinvariant bezüglich einer Systemdrehachse (39) ausgebildet ist.

7. System nach einem der vorhergehenden Ansprüche,
**dadurch gekennzeichnet ,**
**dass** zur Signalübertragung das digitale Signal auf eine HF-Trägerfrequenz aufmoduliert ist.

8. System nach einem der vorhergehenden Ansprüche,
**dadurch gekennzeichnet ,**
**dass** das digitale Signal kapazitiv von der Sendevorrichtung (11) an die Empfangsvorrichtung (25) übertragbar ist.

9. System nach Anspruch 8,
**dadurch gekennzeichnet ,**
**dass** zur kapazitiven Signalübertragung die Sendevorrichtung (11) und die Empfangsvorrichtung (25) jeweils eine Elektrode (41) aufweisen.

10. System nach Anspruch 9,
**dadurch gekennzeichnet ,**
**dass** die Elektroden (41) jeweils drehinvariant bezüglich einer Systemdrehachse (39), insbesondere kreisrund, ausgebildet sind.

11. System nach einem der Ansprüche 1 bis 6,
**dadurch gekennzeichnet ,**
**dass** das digitale Signal optisch von der Sendevorrichtung (11) an die Empfangsvorrichtung (25) übertragbar ist.

12. System nach Anspruch 11,
**dadurch gekennzeichnet ,**
**dass** zur optischen Signalübertragung die Sendevorrichtung (11) eine optische Sendeeinheit, insbesondere eine Sendediode, und die Empfangsvorrichtung (25) eine optische Empfangseinheit, insbesondere eine Empfangsdiodenanordnung, umfasst.

13. System nach Anspruch 12,
**dadurch gekennzeichnet ,**
**dass** die optische Sendeeinheit und die optische Empfangseinheit zur Signalübertragung im Infrarot-Bereich, im Ultraviolett-Bereich oder im sichtbaren Bereich ausgebildet sind.

14. System nach Anspruch 12 oder 13,
**dadurch gekennzeichnet ,**
**dass** die optische Sende- bzw. Empfangseinheit zentrisch bezüglich einer Systemdrehachse (39) ausgebildet ist.

15. System nach einem der vorhergehenden Ansprüche,
**dadurch gekennzeichnet ,**
**dass** zur Energieerzeugung die Empfangsvorrichtung (25) einen Leistungsoszillator oder Takt/Frequenzgenerator umfasst.

16. System nach einem der vorhergehenden Ansprüche,
**dadurch gekennzeichnet ,**
**dass** die Energie induktiv von der Empfangsvorrichtung (25) an die Sendevorrichtung (11) übertragbar ist.

17. System nach Anspruch 16,
**dadurch gekennzeichnet ,**
**dass** zur induktiven Energieübertragung die Empfangsvorrichtung (25) und die Sendevorrichtung (11) jeweils ein insbesondere durch Ferrit unterstütztes Spulensystem (43) aufweisen.

18. System nach Anspruch 17,
**dadurch gekennzeichnet,**
**dass** das Spulensystem (43) der Sendevorrichtung (11) als Teil eines auf eine Betriebsfrequenz des Spulensystems (43) der Empfangsvorrichtung (25) abgestimmten Serienschwingkreises ausgebildet ist.

19. System nach Anspruch 17 oder 18,
**dadurch gekennzeichnet ,**
**dass** die Spulensysteme (43) der Empfangsvorrichtung (25) und der Sendevorrichtung (11) einen Abstand von einigen Millimetern oder einen kleineren Abstand besitzen.

20. System nach einem der Ansprüche 1 bis 15,
**dadurch gekennzeichnet ,**
**dass** die Energie optisch von der Empfangsvorrichtung (25) an die Sendevorrichtung (11) übertragbar ist.

21. System nach Anspruch 20,
**dadurch gekennzeichnet ,**
**dass** zur optischen Energieübertragung die Empfangsvorrichtung (25) eine Lichtsendeeinheit und die Sendevorrichtung (11) zumindest ein Photovoltaik-Element, insbesondere eine Solarzelle, umfasst.

22. System nach Anspruch 21,
**dadurch gekennzeichnet ,**
**dass** das oder die Photovoltaik-Elemente drehinvariant bezüglich einer Systemdrehachse (39) ausgebildet sind.

23. Verfahren zur berührungslosen Signal- und Energieübertragung zwischen einer Sendevorrichtung (11) und einer Empfangsvorrichtung (25), die relativ zueinander bewegbar, insbesondere drehbewegbar sind, wobei
- ein Messsignal mittels einer Messeinrichtung erzeugt,
- insbesondere das Messsignal mittels einer A/D-Wandlungseinheit (15) der Sendevorrichtung (11) digitalisiert,
- ein digitales Signal, das zumindest das Messsignal umfasst, mittels der Sendevorrichtung (11) gesendet,
- das gesendete digitale Signal mittels der Empfangsvorrichtung (25) empfangen, und
- Energie von der Empfangsvorrichtung (25) an die Sendevorrichtung (11) zur Energieversorgung der Sendevorrichtung (11) und/oder der Messeinrichtung übertragen wird.

24. Verfahren nach Anspruch 23,
**dadurch gekennzeichnet ,**
**dass** die Messeinrichtung und/oder die Sendevorrichtung (11) an einem rotierenden Gegenstand, insbesondere einer Spindel oder einer Welle, angebracht wird.

25. Verfahren nach Anspruch 23 oder 24,
**dadurch gekennzeichnet ,**
**dass** zumindest ein Teil des digitalen Signals mittels einer D/A-Wandlungseinheit (33) der Empfangsvorrichtung (25) analogisiert wird.

26. Verfahren nach einem der Ansprüche 23 bis 25,
**dadurch gekennzeichnet ,**
**dass** zur Signalübertragung das digitale Signal auf eine HF-Trägerfrequenz aufmoduliert wird.

27. Verfahren nach einem der Ansprüche 23 bis 26,
**dadurch gekennzeichnet ,**
**dass** das digitale Signal kapazitiv von der Sendevorrichtung (11) an die Empfangsvorrichtung (25) übertragen wird.

28. Verfahren nach einem der Ansprüche 23 bis 25,
**dadurch gekennzeichnet ,**
**dass** das digitale Signal optisch von der Sendevorrichtung (11) an die Empfangsvorrichtung (25) übertragen wird.

29. Verfahren nach Anspruch 28,
**dadurch gekennzeichnet ,**
**dass** das digitale Signal im Infrarot-Bereich, im Ultraviolett-Bereich oder im sichtbaren Bereich übertragen wird.

30. Verfahren nach einem der Ansprüche 23 bis 29,
**dadurch gekennzeichnet ,**
**dass** die Energie induktiv von der Empfangsvorrichtung (25) an die Sendevorrichtung (11) übertragen wird.

31. Verfahren nach Anspruch 30,
**dadurch gekennzeichnet ,**
**dass** die Sendevorrichtung (11) auf eine Betriebsfrequenz der Empfangsvorrichtung (25) abgestimmt wird.

32. Verfahren nach einem der Ansprüche 23 bis 29,
**dadurch gekennzeichnet ,**
**dass** die Energie optisch von der Empfangsvorrichtung (25) an die Sendevorrichtung (11) übertragen wird.
